# EUROPEAN PATENT SPECIFICATION

(11) **EP 3 532 180 B1**
(45) Date of publication and mention of the grant of the patent: **17.11.2021**
(21) Application number: 17811699.2
(22) Date of filing: 24.10.2017
(51) Int. Cl.: B09B 5/00, B01D 11/02, B09B 3/00

(54) **PROCESS FOR THE RECOVERY OF CHEMICAL COMPOUNDS FROM EXHAUSTED EXTINGUISHING POWDERS**
VERFAHREN ZUR RÜCKGEWINNUNG VON CHEMISCHEN VERBINDUNGEN AUS ERSCHÖPFTEN LÖSCHPULVERN
PROCÉDÉ DE RÉCUPÉRATION DE COMPOSÉS CHIMIQUES À PARTIR DE POUDRES D'EXTINCTION ÉPUISÉES

(30) Priority: 27.10.2016 IT 201600108478
(43) Date of publication of application: 04.09.2019
(73) Proprietor: PROPHOS CHEMICALS S.r.l., 26037 San Giovanni in Croce (CR) (IT)
(72) Inventor: MICHELOTTI, Marco, 26037 San Giovanni in Croce (CR) (IT); PIGOLI, Luca, 26037 San Giovanni in Croce (CR) (IT); VERONA, Massimiliano Donato, 26037 San Giovanni in Croce (CR) (IT)
(74) Representative: Villa, Livia
(86) International application number: PCT/IB2017/056587
(87) International publication number: WO 2018/078523

(56) References cited:
- EP-A1- 2 522 410
- DE-A1-102004 024 697
- DE-A1-102005 063 039

## Description

### FIELD OF THE INVENTION

The present invention relates to a process for the recovery of chemical compounds from exhausted extinguishing powders. In particular, said process is based on the use of exhausted extinguishing powders as starting materials, which, appropriately processed, allow the recovery of chemical compounds suitable for use as fertilisers or catalysts for adhesives.

### STATE OF THE ART

In the fire-fighting field, the European Committee for Standardisation (CEN) has defined several classes of fire according to the nature of the combustible material which generated it:
- class A fires, generated by solid combustible materials, such as wood, paper, leather, rubber and derivatives, textiles, with the exception of metals;
- class B fires, generated by liquid combustible materials, such as hydrocarbons, alcohols, solvents, mineral oil greases, ethers, gasolines and the like, and by liquefiable solids;
- class C fires, generated by gaseous combustible materials, such as hydrogen, methane, butane, acetylene, propylene;
- class D fires, generated by combustible metals, such as potassium, sodium, and alloys thereof, magnesium, zinc, zirconium, titanium and powdered aluminium; and
- class F fires, generated by oils and grease in cooking appliances.

A class E fire is also defined (not contemplated by the CEN classification), with reference to powered electrical equipment, such as transformers, alternators, switches, switchboards.

There are essentially three types of extinguishing agents, which act respectively by smothering, cooling or chemical reaction; these actions can be (and generally are) combined.

Chemical reaction agents are those that chemically modify the fuel or the comburent to make them no longer suitable for combustion, or they chemically modify themselves to produce smothering or cooling agents. Typical examples are chemical or extinguishing powders and halogenated hydrocarbons, known also as halons, which are now prohibited because they are very harmful for the stratospheric ozone layer. Alternatively to them, there are substitutes with low environmental impact, but they are very expensive extinguishing agents, with limited efficiency.

Chemical powders or extinguishing powders, which are likely to be the most common extinguishing agent, have peculiar characteristics, because they are modified chemically with the action of heat and release gas, thus leaving a non-combustible or active residue. The most common type, because of its universal usability and high effectiveness, is the so-called polyvalent powder (also known as ABC powder) mainly comprising monoammonium phosphate (NH₄)H₂PO₄, ammonium sulfate (NH₄)₂SO₄, colouring and thinning additives. Typically, ammonium phosphate is, in percentage terms, from 20% to 90% (high extinguishing capacity). In the so-called standard powder, said percentage is 40%.

Powders called 'BC', with very high extinguishing capacity, contain complexes of urea, sodium and potassium bicarbonate (e.g. Monnex powder, Purple-K powder, Solvay BI-EX powder) and are used to a limited extent, although they are used in the petrochemical industry and in airport because of their exceptional effectiveness on fires fuelled by combustible liquids or gases; however, they are not effective on solid materials. Of special use is sodium chloride, effective on fires generated by metals (sodium, magnesium, aluminium), which smothers by melting and reconstituting an impermeable crust. Sodium bicarbonate is also an extinguishing agent, being the basic product of BC powders with ordinary extinguishing capacity and no longer in use nowadays.

Concerning polyvalent extinguishing powder, i.e. the most widely used ones, to the aforesaid composition are added silicone additives to assure their water repellence. Use of silicone oil in the production phase makes it very problematic to recover the extinguishing powder waste.

Every year, in Italy alone, approximately 10,000 tonnes of new product (mainly in extinguishers) are placed on the market and, according to current laws, every 36 months, the extinguishing powder, which by now has become exhausted, must be disposed of as waste. However, only one third of these 10,000 tonnes is regularly disposed of. It is instead supposed that most of the waste is dispersed on the ground, with severe damage for the environment, or even unlawfully re-introduced on the market as a fresh product. Therefore, there is an extremely pressing need to solve the problem of the high quantity of exhausted extinguishing powders that are accumulated every year, in order to minimise the environmental damage deriving mainly from the presence of polluting components such as colouring, thinning and water-repellent additives, above all silicone oils, in said powders. Examples of how to treat extinguishing powders waste can be found in EP2522410, DE102004024697 and DE102005063039.

It must also be considered that the demand for phosphate-based fertilisers is constantly growing. At the same time, the purity of phosphorus reserves is declining and hence production costs are rising. Phosphorus is an essential element in agriculture, which cannot be replaced, therefore it is particularly important to be able to recover that which otherwise would be lost in exhausted extinguishing powders.

Thus, the object of the present invention is to identify a method for processing exhausted extinguishing powders that allows to recover useful chemical compounds, that is highly efficient and advantageous both from the implementing and economic viewpoint.

### SUMMARY OF THE INVENTION

Said object has been achieved by a process for the recovery of chemical compounds from extinguishing powders comprising the steps described in claim 1.

The characteristics and advantages of the present invention shall become readily apparent from the following detailed description and from the embodiments provided by way of illustrative, non-limiting examples.

### DETAILED DESCRIPTION OF THE INVENTION

The invention therefore relates to a process for the recovery of chemical compounds from extinguishing powders comprising the steps of:
a) providing an extinguishing powder;
b) adding a solvent and stirring, thereby obtaining a dispersion;
c) letting the solid settle and aspirating the liquid; and
d) collecting the solid comprising at least 80 wt% of chemical compounds present in the extinguishing powder of step a),
wherein
said extinguishing powder comprises at least one chemical compound selected from monoammonium phosphate, ammonium sulfate, potassium sulfate, calcium carbonate, calcium bicarbonate, sodium bicarbonate, potassium bicarbonate, sodium chloride, urea and mixtures thereof, and
said solvent is methanol, ethanol, butanol, acetone, methyl ethyl ketone, pentane, n-hexane, cyclohexane, n-heptane, dichloromethane, benzene, tetrahydrofuran (THF), dimethylformamide (DMFA), dioxane, acetonitrile, dimethyl sulfoxide (DMSO), carbon tetrachloride, ethyl ether, toluene, xylene, naphtha, kerosene, diisopropyl ether, hexyl ether, petroleum ether, rectified petrol, ethyl acetate, butyl acetate, isopropyl laurate, isopropyl palmitate, isopropyl myristate, methyl isobutyl ketone, lauric alcohol, 2-ethylhexanol, amyl acetate, glacial acetic acid, ethylene glycol, glycerine, diethylene glycol stearate, propylene glycol, paraffin, methyl phthalate, C4-C22 fatty acid, or a mixture thereof, further comprising the steps of: b') purifying the solid phase resulting from step c) by adding a mixture comprising microorganisms selected from yeasts, lactic acid bacteria and their combinations;c') letting the solid phase settle and removing the liquid phase;said steps b') and c') to be performed after step c) and before step d).

It was surprisingly found that it is possible to remove the polluting components from extinguishing powders, such as colouring, thinning and water repellent additives, especially silicone oils, so as to recover in an extremely economical, quick and effective way the chemical compounds that can then be reused as such. Indeed, very high yields of such chemical compounds are obtained with respect to the initial quantity in the initial extinguishing powders, i.e. above 80 wt%, with high purity thereof, as shall be seen from the following Examples.

In addition, advantageously, the process of the invention allows to obtain said chemical compounds in a dry form, i.e. the resulting solid is typically in the form of a dry powder and therefore easily manageable and storable.

Indeed, it should be appreciated that the process of the invention allows to separate and recover the chemical compounds present in the extinguishing powders without adding water, i.e. without solubilising them.

Preferably, said solvent is methanol, ethanol, butanol, acetone, methyl ethyl ketone, ethyl acetate, butyl acetate, or a mixture thereof. These solvents are indeed preferable from both the environment and safety viewpoints, as well as advantageous from the economical viewpoint.

In preferred embodiments, said solvent is acetone, methyl ethyl ketone, ethyl acetate, butyl acetate, or a mixture thereof.

In particularly preferred embodiments, said solvent is acetone.

Preferably, in step b), stirring lasts 3-15 minutes, more preferably 5-10 minutes.

In order to increase the yield of the solid in step d), as well as the purity of the chemical compounds contained therein, preferably, steps b) and c) are repeated at least once, before step d).

In preferred embodiments, steps b) and c) are repeated from one to ten times, before step d). This advantageously allows to reduce the volumes of solvent to be used for each repetition of steps b)-c), at the same time speeding up the execution of these steps.

Preferably, in step b), said solvent is added in a volume ratio of at least 0.2:1 to the extinguishing powder.

A greater purity of the final chemical compounds is obtained, by increasing the volume of solvent with respect to the volume of the extinguishing powder.

However, a better compromise between volume of solvent and yield and purity of the chemical compounds is obtained by combining an adequate number of repetitions of steps b)-c) and an adequate volume of solvent for each repetition. The volume of solvent used for each repetition can be equal or it can be different; for example, it may be decreasing, therefore the first addition of solvent can be the greatest one in terms of volume and the last addition of solvent can be the smallest one in terms of volume.

Therefore, the preferred embodiments are those wherein, in step b), said solvent is added in a volume ratio of 0.3:1 to 2:1 to the extinguishing powder and steps b) and c) are repeated three to six times, before step d). More preferably, in step b), said solvent is added in a volume ratio of 0.3:1 to 0.6:1 to the extinguishing powder and steps b) and c) are carried out five times, before step d).

In some embodiments, in step b) stirring is performed by magnetic stirring, mechanical stirring, sonication, ultrasonication or a combination thereof.

In preferred embodiments, in step b) stirring is performed by magnetic stirring.

In other preferred embodiments, in step b) stirring is performed by sonication.

In additional preferred embodiments, in step b) stirring is performed by mechanical stirring.

In particularly preferred embodiments, in step b) stirring is performed by magnetic stirring and subsequent sonication. Specifically, even more preferred are the embodiments wherein in step b) stirring is carried out up to 10 minutes by magnetic stirring and up to 20 minutes by subsequent sonication, before step c).

In step c), the solid containing the chemical compounds is allowed to settle and the supernatant liquid is aspirated. Depending on the aspiration conditions, as well as the nature of silicone oils, it may be observed that, once aspiration is completed, a thin residual film of silicone oil is present on the surface of the solid. In order to maximise the separation of silicone oils, the film can be removed mechanically, for example by using a spatula.

In other embodiments, before step d) of collecting the solid, said solid is heated at a temperature not higher than 60°C. This facilitates the complete removal of the solvent by evaporation, without the decomposition of chemical compounds. Preferably, said solid is heated at a temperature not higher than 50°C, so as to obtain good drying, at the same time also containing costs.

In preferred embodiments, the process of the invention comprises the steps of:
a) providing an extinguishing powder;
b) adding a solvent and stirring by magnetic stirring, mechanical stirring, sonication, ultrasonication or a combination thereof, thereby obtaining a dispersion;
c) letting the solid settle and aspirating the liquid; and
d) collecting the solid comprising at least 90 wt% of chemical compounds present in the extinguishing powder of step a),
wherein
said solvent is acetone, methyl ethyl ketone, ethyl acetate, butyl acetate, or a mixture thereof, and
steps b) and c) are repeated from one to five times, before step d).

In addition to the steps described above, the process of the invention can further comprise a step e) of filtering the aspirated liquid and joining the resulting solid to the solid collected in step d).

The aspirated liquid can indeed comprise solid in suspension which contains the chemical compounds to be recovered, so once it is collected, the liquid can be filtered, so as to increase the overall solid yield.

The process of the invention can also comprise a step f) of dispersing the solid collected in step d) in solvent, which can be the same solvent as used in step b) or another one among those listed above. Such a dispersion in solvent allows to transfer the solid thus obtained and to handle it more easily.

Alternatively, the process of the invention can also comprise a step f') of solubilising the chemical compounds in water and of re-crystallising them.

The process of the invention further comprises steps b') and c'), to be carried out after step c) and before step d).

Step b') is a step of additionally purifying the solid resulting from step c) from silicone oil residues. Said additional purification can be carried out by adding a mixture comprising micro-organisms, such as yeasts, lactic bacteria and combinations thereof. Preferably, lactic bacteria are *Lactobacillus bulgaricus, Streptococcus thermophilus* or a combination thereof.

At the end of step b'), step c') is carried out wherein the solid is allowed to settle and the supernatant liquid is aspirated.

Without wishing to be bound by any theory, it is deemed that such micro-organisms are able to metabolise the silicone oil residues, thus fully purifying the chemical compounds deriving from extinguishing powder.

In particular, such a mixture comprises brewer's yeast, lactic bacteria or a combination thereof.

In some particularly preferred embodiments, said mixture comprises brewer's yeast and a nutrient selected from sugar, molasses, maltodextrin and combinations thereof.

In other particularly preferred embodiments, said mixture comprises yoghurt, as a source of lactic bacteria, and a nutrient selected from sugar, molasses, lactose and a combination thereof.

The term "sugar" means monosaccharides, disaccharides, oligosaccharides, polysaccharides and mixtures thereof.

Advantageously, it has been observed that these microorganisms allow to remove not only the remaining residues of silicone oils, but also any other solvent residues. Preferably, said mixture comprising microorganisms is in a weight ratio to the extinguishing powder provided in step a) of 1:2 to 1:20, more preferably of 1:3 to 1:16. In preferred embodiments, in step b) of the process of the invention, a sorbent material can further be added, as being able to remove also the residues of colouring agent deriving from the extinguishing powder.

Said sorbent material can be an absorbent material, an adsorbent material, or a combination thereof.

Such sorbent material is preferably selected from zeolite, pumice, diatomaceous earth, bentonite, clay, lignin, sulphonated lignin, chitosan, and combinations thereof.

The term "lignin" means to include also all the vegetable products containing the same, such as peat and fruit stones.

More preferably, said sorbent material is selected from zeolite, clay, lignin and a combination thereof.

Advantageously, such sorbent materials can be used in particle sizes so as to be easily separated from the chemical compounds by simple mechanical sieving. For example, the sorbent materials can have a particle size higher than 200 µm.

Preferably, said sorbent material is in a weight ratio to the extinguishing powder provided in step a) of 1:2 to 1:10, more preferably of 1:3 to 1:8.

When the process of the invention uses also sorbent materials, then the process will also comprise a step g) of separating the sorbent materials from the chemical compounds, preferably by sieving.

In particularly preferred embodiments, the process of the invention comprises the steps of:
a) providing an extinguishing powder;
b) adding a solvent and stirring by magnetic stirring, mechanical stirring, sonication, ultrasonication or a combination thereof, thereby obtaining a dispersion;
c) letting the solid settle and aspirating the liquid;
b') purifying the solid resulting from step c) by adding a mixture comprising micro-organisms selected from yeasts, lactic bacteria and combinations thereof;
c') letting the solid settle and aspirating the liquid;
d) collecting the solid comprising at least 90 wt% of chemical compounds present in the extinguishing powder of step a),
wherein
said solvent is acetone, methyl ethyl ketone, ethyl acetate, butyl acetate, or a mixture thereof,
steps b) and c) are repeated from one to five times, before step d), and in at least one of the steps b) a sorbent material is further added, said sorbent material being zeolite, clay, lignin or a combination thereof, and said sorbent material being separated by sieving before step d).

Preferably, the solid obtained from the process of the invention comprises at least 90 wt% of chemical compounds present in the extinguishing powder of step a), more preferably at least 95 wt% of chemical compounds present in the extinguishing powder of step a), even more preferably at least 98 wt% of chemical compounds present in the extinguishing powder of step a).

This means that the process of the invention allows to recover almost completely the chemical compounds present in the extinguishing powders, through steps that are simple and economical to implement, and with evident environmental advantages.

The chemical compounds thus recovered can then be used without any additional treatment, for example directly in the production of fertilisers, fireproofing agents for chipboards, flame retardants, and, once dissolved in water, as acid catalysts for adhesives. As will be readily apparent from the following working Examples, the solid collected through the process of the invention has been shown to be more water-soluble and workable than similar raw materials for fertilisers.

It should be understood that all combinations of preferred aspects and embodiments of the process of the invention, as described above, are deemed to be described.

It should be understood also that all the aspects identified as preferred and advantageous for the process of the invention are to be deemed as similarly preferred and advantageous also for the uses of the chemical compounds obtainable therefrom.

Below are working examples of the present invention provided for illustrative purposes.

### EXAMPLES

### Example 1.

100 g of acetone were added to 50 g of extinguishing powder comprising monoammonium phosphate, ammonium sulfate, amorphous silica, blue dye, and silicone oil, in a beaker, then starting the magnetic stirring at room temperature for approximately 6 hours. Once said period of time elapsed, magnetic stirring was interrupted, thus letting the solid settle.

The supernatant liquid was then aspirated, letting the remaining solid dry.

The dried solid was placed in water and then filtered, to calculate the yield of recovered chemical compounds with respect to their content in the initial extinguishing powder. The formation of a light yellow coloured formation was observed, whereas blue powder was retained on the filter, being ascribable to the dye, silica and a small part of non-solubilised chemical compounds.

It was observed that the final yield in terms of monoammonium phosphate and ammonium sulfate was equal to 82.2 wt%.

### Example 2.

50 g of acetone were added to 50 g of extinguishing powder comprising monoammonium phosphate, ammonium sulfate, amorphous silica, blue dye, and silicone oil, in a beaker, then starting the magnetic stirring at room temperature for approximately 10 hours. Once said period of time elapsed, magnetic stirring was interrupted, thus letting the solid settle for 10 more minutes.

The supernatant liquid was then aspirated, storing it separately.

Further 50 g of acetone were added to the remaining solid, then repeating the steps described above.

The additions of the same volume of acetone and the repetition of the steps described above were carried out additional 3 times, while every time storing the aspirated supernatant liquid separately.

The solid remaining after the last aspiration of supernatant liquid was allowed to dry. The dried solid was placed in water and then filtered, to calculate the yield of recovered chemical compounds with respect to their content in the initial extinguishing powder. The formation of a light yellow coloured formation was observed, whereas blue powder was retained on the filter, being ascribable to the dye, silica and a small part of non-solubilised chemical compounds.

The residual solid dispersed in the aspirated and stored supernatant liquid was also separated, so as to maximise the recovery of chemical compounds.

It was observed that the final yield in terms of monoammonium phosphate and ammonium sulfate was equal to 96.14 wt%.

### Example 3.

Example 2 was repeated having carried out for a total number of 7 times the addition of acetone and the steps up to the aspiration and separate storage of the supernatant liquid, before letting the solid dry.

The final yield in terms of monoammonium phosphate and ammonium sulfate was equal to 95.56 wt%.

### Example 4.

A solubility test was carried out between the chemical compounds recovered in Example 2 and three commercial products of monoammonium phosphate 12-52 [i.e. ammoniacal nitrogen (12%), phosphorous pentoxide (P₂O₅) (52%)], intended for use as fertilisers. 100 g of sample and 400 g of water were placed in a beaker.

After magnetic stirring for 10 minutes at room temperature, it was observed that the chemical compounds recovered in Example 2 were solubilised almost completely, whereas vice versa in the three beakers with the samples of the commercial products, a substantial insolubility was observed.

This demonstrated and confirmed the very high purity of the salts recovered through the process of the invention.

### Example 5.

Example 1 was repeated by using methyl ethyl ketone instead of acetone.

It was observed that the final yield in terms of monoammonium phosphate and ammonium sulfate was equal to 97.98 wt%.

### Example 6.

Example 2 was repeated by using ethanol instead of acetone, and repeating the steps overall 7 times.

It was observed that the final yield in terms of monoammonium phosphate and ammonium sulfate was equal to 99.62 wt%.

### Example 7.

75 g of acetone were added to 75 g of extinguishing powder comprising monoammonium phosphate, ammonium sulfate, amorphous silica, blue dye, and silicone oil, in a beaker, then starting the magnetic stirring at room temperature for approximately 10 hours. After said period of time elapsed, the magnetic stirring was interrupted, and the beaker was placed in a sonicating bath for 6 minutes.

The supernatant liquid was then aspirated, then storing it separately.

After a few minutes to let the superficial layer of acetone evaporate, the thin layer of dark blue powder was physically removed by using a spatula, wherein the dye and silicone oil residues were present. In the meantime, in a second beaker, 5 g of brewer's yeast were dissolved in a minimum amount of water (approximately 5 g), after which approximately 2.5 g of sugar were added. After 30 minutes of culture elapsed to give time to the bacteria to grow and be activated, the yeast was transferred into the first beaker containing the powder, while mixing with a probe. After approximately 1 hour, the beaker was transferred to a thermostatic bath for approximately 2 hours at 30°C, until the complete evaporation of the acetone. The powder was observed to change colour from blue to light green. After said time elapsed, a solubility test was carried out, by dissolving approximately 10 g thereof in 40 g of water. Surprisingly, the characteristic behaviour ascribable to the presence of silicone oil (absence of the film with high surface tension) was not observed, but rather excellent solubility. This indicated the complete removal of the silicone oils from the solid.

### Example 8.

75 g of acetone were added to 75 g of extinguishing powder comprising monoammonium phosphate, ammonium sulfate, amorphous silica, blue dye, and silicone oil, in a beaker, then starting the magnetic stirring at room temperature for approximately 10 hours. After said period of time elapsed, the magnetic stirring was interrupted, and the beaker was placed in a sonicating bath for 6 minutes.

The supernatant liquid was then aspirated, then storing it separately.

After a few minutes to let the superficial layer of acetone evaporate, the thin layer of dark blue powder was physically removed by using a spatula, wherein the dye and silicone oil residues were present. In the meantime, in a second beaker, 5 g of yoghurt were dissolved in a minimum amount of water (approximately 5 g), after which approximately 2.0 g of sugar and 1.5 g of lactose were added. After 30 minutes of culture elapsed to give time to the bacteria to grow and be activated, the yoghurt was transferred into the first beaker containing the powder, while mixing with a probe. After approximately 1 hour, the beaker was transferred to a thermostatic bath for approximately 2 hours at 30°C, until the complete evaporation of the acetone. The powder was observed to change colour from blue to light blue. After said time elapsed, a solubility test was carried out, by dissolving approximately 10 g thereof in 40 g of water. Surprisingly, the characteristic behaviour ascribable to the presence of silicone oil (absence of the film with high surface tension) was not observed, but rather excellent solubility. This indicated the complete removal of the silicone oils from the solid.

### Example 9.

Example 8 was repeated by using maltodextrins instead of sugar.

Also in this case, at the end of the test, the characteristic behaviour ascribable to the presence of silicone oil (absence of the film with high surface tension) was not observed, but rather excellent solubility. This indicated the complete removal of the silicone oils from the solid.

### Example 10.

45 g of acetone were added to 45 g of extinguishing powder comprising monoammonium phosphate, ammonium sulfate, amorphous silica, blue dye, and silicone oil, in a beaker, then starting the magnetic stirring at room temperature for approximately 10 hours. After said period of time elapsed, the magnetic stirring was interrupted, and the beaker was placed in a sonicating bath for 6 minutes.

Once sonication was completed, the supernatant was aspirated until reaching the limit of the superficial film between the solution and the powder, then storing the supernatant separately. A total number of 3 washings were carried out, while repeating the steps described above.

Olive stones were ground and sieved with a 250 µm sieve. 10 g of ground material having particle size equal to or greater than 250 µm were added to the washed powder together with additional 45 g of acetone, while stirring for 2h. Sonication was then carried out for 6 minutes and the supernatant was removed. The powder was dried and sieved with 250 µm sieve, so as to separate the ground stones from the solid deriving from the extinguishing powder.

The powder was completely discoloured when compared to only washings with acetone which do not allow a complete removal of the dye present in the extinguishing powders. Indeed, after stirring, the absorbed dye was observed on the grains of the ground stones. 43.0 g of white solid chemical compounds were recovered.

### Example 11.

64 g of exhausted ABC powder in a beaker were weighed at the electronic scale, and 64 g of acetone were added while starting the magnetic stirring at room temperature. The mixture was stirred for 5 minutes under an aspirating hood. After the 5 minutes elapsed, the stirring was stopped, and the beaker was placed in a sonicating bath for 3 minutes. After sonication was completed, the supernatant liquid was then aspirated, while storing it separately.

A total number of 3 washings were carried out, while repeating the steps described above. Olive stones were ground and sieved with a 250 µm sieve. 12.8 g of ground material having particle size equal to or greater than 250 µm were added to the washed powder together with an additional 64 g of acetone, stirring for 45 minutes. A clear change in colour was observed after 15 minutes and gradually less pronounced up to 45 min.

Sonication was then carried out for 6 minutes and the supernatant was removed.

The solid thus obtained was allowed to dry.

In parallel, a culture of brewer's yeast was prepared (5 g of yeast, 5 g of maltodextrins and 5 g of water) which was mixed periodically for 2.5 h.

12.8 g of the resulting mixture were then added to the solid, leaving in bath at 35 °C for 30 minutes and mixing periodically. Lastly, 90 ml of acetone were added, stirring for 5 minutes. Sonication was then carried out for 3 minutes and the supernatant was removed. The powder was dried and sieved with 250 µm sieve, so as to separate the ground stones from the solid deriving from the extinguishing powder.

A solubility test was then conducted on the powder thus recovered (sample: 10 g of powder and 40 g of water).

Also in this case, at the end of the test, the characteristic behaviour ascribable to the presence of silicone oil (absence of the film with high surface tension) was not observed, but rather excellent solubility. This indicated the complete removal of the silicone oils from the solid. Moreover, the resulting solid was also perfectly white, since the ground stones had removed all dye residues.

It was observed that the final yield in terms of monoammonium phosphate and ammonium sulfate was equal to 91 wt%.

## Claims

1. A process for the recovery of chemical compounds from extinguishing powders comprising the steps of:
a) providing extinguishing powder;
b) adding a solvent and stirring, thereby obtaining a dispersion;
c) letting the solid phase settle and removing the liquid phase; and
d) collecting the solid phase comprising at least 80 wt% of chemical compounds present in the extinguishing powder of step a),
wherein
said extinguishing powder comprises at least one chemical compound selected from monoammonium phosphate, ammonium sulfate, potassium sulfate, calcium carbonate, calcium bicarbonate, sodium bicarbonate, potassium bicarbonate, sodium chloride, urea and mixtures thereof, and
said solvent is methanol, ethanol, butanol, acetone, methyl ethyl ketone, pentane, n-hexane, cyclohexane, n-heptane, dichloromethane, benzene, tetrahydrofuran (THF), dimethylformamide (DMFA), dioxane, acetonitrile, dimethylsulfoxide (DMSO), carbon tetrachloride, ethyl ether, toluene, xylene, naphtha, kerosene, diisopropyl ether, hexyl ether, petroleum ether, rectified petroleum, ethyl acetate, butyl acetate, isopropyl laurate, isopropyl palmitate, isopropyl myristate, methyl isobutyl ketone, lauric alcohol, 2-ethylhexanol, amyl acetate, glacial acetic acid, ethylene glycol, glycerin, diethylene glycol stearate, propylene glycol, paraffin, methyl phthalate, C4-C22 fatty acid, or a mixture thereof, **characterized in that** it further comprises the steps of:
b') purifying the solid phase resulting from step c) by adding a mixture comprising microorganisms selected from yeasts, lactic acid bacteria and their combinations;
c') letting the solid phase settle and removing the liquid phase;
said steps b') and c') to be performed after step c) and before step d).

2. The process of claim 1, wherein said solvent is methanol, ethanol, butanol, acetone, methyl ethyl ketone, ethyl acetate, butyl acetate, or a mixture thereof.

3. The process of claim 1 or 2, wherein steps b) and c) are repeated at least once, before step d).

4. The process of claim 3, wherein steps b) and c) are repeated one to ten times, before step d).

5. The process of any one of claims 1-4, wherein in step b) said solvent is added in a volume ratio of at least 0.2:1 to the extinguishing powder.

6. The process of any one of claims 1-5, comprising the steps of:
a) providing extinguishing powder;
b) adding a solvent and stirring through magnetic stirring, mechanical stirring, sonication, or a combination thereof, thereby obtaining a dispersion;
c) letting the solid phase settle and removing the liquid phase; and
d) collecting the solid phase comprising at least 90 wt% of chemical compounds present in the extinguishing powder of step a),
wherein
said solvent is acetone, methyl ethyl ketone, ethyl acetate, butyl acetate, or a mixture thereof, and
the steps b) and c) are repeated one to five times, before step d).

7. The process of any one of claims 1-6, wherein in step b) is further added a sorbent material selected from zeolite, pumice, diatomaceous earth, bentonite, clay, lignin, and their combinations.

8. The process of claim 7, further comprising a step g) of removing the sorbent material by sieving, said step g) to be performed before step d).

9. The process of any one of claims 1-8, comprising the steps of:
a) providing extinguishing powder;
b) adding a solvent and stirring through magnetic stirring, mechanical stirring, sonication, or combination thereof, thereby obtaining a dispersion;
c) letting the solid phase settle and removing the liquid phase;
b') purifying the solid phase resulting from step c) by adding a mixture comprising microorganisms selected from yeasts, lactic acid bacteria and their combinations;
c') letting the solid phase settle and removing the liquid phase;
d) collecting the solid phase comprising at least 90 wt% of chemical compounds present in the extinguishing powder of step a),
wherein
said solvent is acetone, methyl ethyl ketone, ethyl acetate, butyl acetate, or a mixture thereof,
the steps b) and c) are repeated one to five times, before step d), and
in at least one of the steps b) is further added a sorbent material, said sorbent material being zeolite, clay, lignin, or a combination thereof, and said sorbent material being removed by sieving before step d).

## Patentansprüche

1. Verfahren zur Rückgewinnung von chemischen Verbindungen aus Löschpulvern, umfassend die folgenden Schritte:
a) Bereitstellen von Löschpulver;
b) Hinzufügen eines Lösungsmittels und Rühren, wodurch eine Dispersion erhalten wird;
c) Absetzenlassen der festen Phase und Entfernen der flüssigen Phase; und
d) Sammeln der festen Phase, die zumindest 80 Gew.-% an chemischen Verbindungen umfasst, die in dem Löschpulver von Schritt a) vorhanden sind,
wobei
das Löschpulver zumindest eine chemische Verbindung umfasst, ausgewählt aus Monoammoniumphosphat, Ammoniumsulfat, Kaliumsulfat, Calciumcarbonat, Calciumbicarbonat, Natriumbicarbonat, Kaliumbicarbonat, Natriumchlorid, Harnstoff und Mischungen davon, und
das Lösungsmittel Methanol, Ethanol, Butanol, Aceton, Methylethylketon, Pentan, n-Hexan, Cyclohexan, n-Heptan, Dichlormethan, Benzol, Tetrahydrofuran (THF), Dimethylformamid (DMFA), Dioxan, Acetonitril, Dimethylsulfoxid (DMSO), Kohlenstofftetrachlorid, Ethylether, Toluol, Xylol, Naphtha, Kerosin, Diisopropylether, Hexylether, Petroleumether, gerichtetes Petroleum, Ethylacetat, Butylacetat, Isopropyllaurat, Isopropylpalmitat, Isopropylmyristat, Methylisobutylketon, Laurinalkohol, 2-Ethylhexanol, Amylacetat, Eisessigsäure, Ethylenglycol, Glycerin, Diethylenglycolstearat, Propylenglycol, Paraffin, Methylphthalat, C4-C22-Fettsäure oder eine Mischung davon ist,
**dadurch gekennzeichnet, dass** es ferner die folgenden Schritte umfasst:
b') Reinigen der festen Phase, die aus Schritt c) resultiert, durch Hinzufügen einer Mischung, die Mikroorganismen umfasst, ausgewählt aus Hefen, Milchsäurebakterien und ihren Kombinationen;
c') Absetzenlassen der festen Phase und Entfernen der flüssigen Phase;
wobei Schritt b') und c') nach Schritt c) und vor Schritt d) durchzuführen sind.

2. Verfahren nach Anspruch 1, wobei das Lösungsmittel Methanol, Ethanol, Butanol, Aceton, Methylethylketon, Ethylacetat, Butylacetat oder eine Mischung davon ist.

3. Verfahren nach Anspruch 1 oder 2, wobei Schritt b) und c) zumindest einmal vor Schritt d) wiederholt werden.

4. Verfahren nach Anspruch 3, wobei Schritt b) und c) ein- bis zehnmal vor Schritt d) wiederholt werden.

5. Verfahren nach einem der Ansprüche 1-4, wobei in Schritt b) das Lösungsmittel in einem Volumenverhältnis von zumindest 0,2:1 zu dem Löschpulver hinzugefügt wird.

6. Verfahren nach einem der Ansprüche 1-5, umfassend die folgenden Schritte:
a) Bereitstellen von Löschpulver;
b) Hinzufügen eines Lösungsmittels und Rühren durch magnetisches Rühren, mechanisches Rühren, Beschallung oder eine Kombination davon, wodurch eine Dispersion erhalten wird;
c) Absetzenlassen der festen Phase und Entfernen der flüssigen Phase; und
d) Sammeln der festen Phase, die zumindest 90 Gew.-% an chemischen Verbindungen umfasst, die in dem Löschpulver von Schritt a) vorhanden sind,
wobei
das Lösungsmittel Aceton, Methylethylketon, Ethylacetat, Butylacetat oder eine Mischung davon ist, und
Schritt b) und c) ein- bis fünfmal vor Schritt d) wiederholt werden.

7. Verfahren nach einem der Ansprüche 1-6, wobei in Schritt b) ferner ein Sorptionsmaterial hinzugefügt wird, ausgewählt aus Zeolith, Bimsstein, Diatomeenerde, Bentonit, Ton, Lignin und ihren Kombinationen.

8. Verfahren nach Anspruch 7, ferner umfassend einen Schritt g) des Entfernens des Sorptionsmaterials durch Sieben, wobei Schritt g) vor Schritt d) durchzuführen ist.

9. Verfahren nach einem der Ansprüche 1-8, umfassend die folgenden Schritte:
a) Bereitstellen von Löschpulver;
b) Hinzufügen eines Lösungsmittels und Rühren durch magnetisches Rühren, mechanisches Rühren, Beschallung oder eine Kombination davon, wodurch eine Dispersion erhalten wird;
c) Absetzenlassen der festen Phase und Entfernen der flüssigen Phase;
b') Reinigen der festen Phase, die aus Schritt c) resultiert, durch Hinzufügen einer Mischung, die Mikroorganismen umfasst, ausgewählt aus Hefen, Milchsäurebakterien und ihren Kombinationen;
c') Absetzenlassen der festen Phase und Entfernen der flüssigen Phase;
d) Sammeln der festen Phase, die zumindest 90 Gew.-% an chemischen Verbindungen umfasst, die in dem Löschpulver von Schritt a) vorhanden sind,
wobei
das Lösungsmittel Aceton, Methylethylketon, Ethylacetat, Butylacetat oder eine Mischung davon ist,
Schritt b) und c) ein- bis fünfmal vor Schritt d) wiederholt werden, und
in zumindest einem der Schritte b) ferner ein Sorptionsmaterial hinzugefügt wird, wobei das Sorptionsmaterial Zeolith, Ton, Lignin oder eine Kombination davon ist, und das Sorptionsmittel vor Schritt d) durch Sieben entfernt wird.

## Revendications

1. Procédé de récupération de produits chimiques à partir de poudres d'extinction comprenant les étapes de :
a) fourniture d'une poudre d'extinction ;
b) ajout d'un solvant et mélange, ce qui permet l'obtention d'une dispersion ;
c) décantation de la phase solide et élimination de la phase liquide ; et
d) collecte de la phase solide comprenant au moins 80 % en poids des produits chimiques présents dans la poudre d'extinction de l'étape a),
ladite poudre d'extinction comprenant au moins un composé chimique choisi parmi le phosphate de monoammonium, le sulfate d'ammonium, le sulfate de potassium, le carbonate de calcium, le bicarbonate de calcium, le bicarbonate de sodium, le bicarbonate de potassium, le chlorure de sodium, l'urée et leurs mélanges, et
ledit solvant étant le méthanol, l'éthanol, le butanol, l'acétone, la méthyl éthyl cétone, le pentane, le n-hexane, le cyclohexane, le n-heptane, le dichlorométhane, le benzène, le tétrahydrofurane (THF), le diméthylformamide (DMFA), le dioxane, l'acétonitrile, le diméthylsulfoxyde (DMSO), le tétrachlorure de carbone, l'éther éthylique, le toluène, le xylène, le naphta, le kérosène, l'éther diisopropylique, l'éther hexylique, l'éther de pétrole, le pétrole rectifié, l'acétate d'éthyle, l'acétate de butyle, le laurate d'isopropyle, le palmitate d'isopropyle, le myristate d'isopropyle, la méthyl isobutyl cétone, l'alcool laurique, le 2-éthylhexanol, l'acétate d'amyle, l'acide acétique glacial, l'éthylène glycol, le glycérine, le stéarate de diéthylène glycol, le propylène glycol, la paraffine, le phtalate de méthyle, un acide gras en C4 à C22, ou leurs mélanges, **caractérisé en ce qu'**il comprend en outre les étapes de :
b') purification de la phase solide résultant de l'étape c) par ajout d'un mélange comprenant des microorganismes choisis parmi les levures, les bactéries d'acide lactique et leurs combinaisons ;
c') décantation de la phase solide et élimination de la phase liquide ;
lesdites étapes b') et c') devant être réalisées après l'étape c) et avant l'étape d).

2. Procédé selon la revendication 1, ledit solvant étant le méthanol, l'éthanol, le butanol, l'acétone, le méthyl éthyl cétone, l'acétate d'éthyle, l'acétate de butyle ou les mélanges de ceux-ci.

3. Procédé selon la revendication 1 ou 2, lesdites étapes b) et c) étant répétées au moins une fois, avant l'étape d).

4. Procédé selon la revendication 3, lesdites étapes b) et c) étant répétées une à dix fois, avant l'étape d).

5. Procédé selon l'une quelconque des revendications 1 à 4, dans l'étape b) ledit solvant étant ajouté dans un rapport molaire d'au moins 0,2:1 par rapport à la poudre d'extinction.

6. Procédé selon l'une quelconque des revendications 1 à 5, comprenant les étapes de :
a) fourniture d'une poudre d'extinction ;
b) ajout d'un solvant et mélange au moyen d'une agitation magnétique, d'une agitation mécanique, d'une sonication ou d'une combinaison de celles-ci, ce qui permet l'obtention d'une dispersion ;
c) décantation de la phase solide et élimination de la phase liquide ; et
d) collecte de la phase solide comprenant au moins 90 % en poids des composés chimiques présents dans la poudre d'extinction de l'étape a),
ledit solvant étant l'acétone, la méthyl éthyl cétone, l'acétate d'éthyle, l'acétate de butyle, ou un mélange de ceux-ci, et
lesdites étapes b) et c) étant répétées une à cinq fois, avant l'étape d).

7. Procédé selon l'une quelconque des revendications 1 à 6, dans l'étape b) étant en outre ajouté un matériau sorbant choisi parmi la zéolite, la pierre ponce, la terre de diatomées, la bentonite, l'argile, la lignine et leurs combinaisons.

8. Procédé selon la revendication 7, comprenant en outre une étape g) d'élimination du matériau sorbant par tamisage, ladite étape g) devant être réalisée avant l'étape d).

9. Procédé selon l'une quelconque des revendications 1 à 8, comprenant les étapes de :
a) fourniture d'une poudre d'extinction ;
b) ajout d'un solvant et mélange au moyen d'une agitation magnétique, d'une agitation mécanique, d'une sonication ou d'une combinaison de celles-ci, ce qui permet l'obtention d'une dispersion ;
c) décantation de la phase solide et élimination de la phase liquide ;
b') purification de la phase solide résultant de l'étape c) par ajout d'un mélange comprenant des microorganismes choisis parmi les levures, les bactéries d'acide lactique et leurs combinaisons ;
c') décantation de la phase solide et élimination de la phase liquide ;
d) collecte de la phase solide comprenant au moins 90 % en poids des composés chimiques présents dans la poudre d'extinction de l'étape a),
ledit solvant étant l'acétone, la méthyl éthyl cétone, l'acétate d'éthyle, l'acétate de butyle, ou un mélange de ceux-ci, et
lesdites étapes b) et c) étant répétées une à cinq fois, avant l'étape d), et
dans au moins l'une des étapes b) étant en outre ajouté un matériau sorbant, ledit matériau sorbant étant la zéolite, l'argile, la lignine ou une combinaison de celles-ci, et ledit matériau sorbant étant éliminé par tamisage avant l'étape d).
